# EUROPEAN PATENT SPECIFICATION

(11) **EP 1 630 317 B1**
(45) Date of publication and mention of the grant of the patent: **04.01.2012**
(21) Application number: 04720757.6
(22) Date of filing: 15.03.2004
(51) Int. Cl.: E04C 5/12

(54) **DEVIATION PREVENTING STRUCTURE FOR WEDGE**
ABLENKUNG VERHINDERNDE STRUKTUR FÜR KEIL
STRUCTURE ANTI-DEVIATION POUR UN COIN

(30) Priority: 18.04.2003 JP 2003115084
(43) Date of publication of application: 01.03.2006
(73) Proprietor: Sumitomo (SEI) Steel Wire Corp., Itama-shi, Hyogo 664-0016 (JP)
(72) Inventor: KADOTANI, Tsutomu, Kanagawa 2430032 (JP); TAKAGAKI, Takashi, Itami-shi, Hyogo 6640016 (JP); YAMADA, Masato, Itami-shi, Hyogo 6640016 (JP); MATSUBARA, Yoshiyuki, Itami-shi, Hyogo 6640016 (JP); NISHINO, Motonobu, Itami-shi, Hyogo 6640016 (JP)
(74) Representative: Cross, Rupert Edward Blount
(86) International application number: PCT/JP2004/003453
(87) International publication number: WO 2004/094744

(56) References cited:
- EP-A2- 0 108 558
- FR-A- 2 582 767
- GB-A- 941 381
- JP-A- 1 033 344
- JP-A- 6 117 054
- JP-A- 8 004 208
- JP-A- 61 161 323
- JP-U- 61 161 323
- US-A- 3 999 418
- US-A- 4 059 931

## Description

### Technical Field

The present invention relates to a wedge deviation preventing structure for use in fixing an end of a PC steel member in a PC structure. More particularly, the present invention relates to a wedge deviation preventing structure capable of providing a fixing wedge, in which split pieces of the wedge can be arranged at the same position in a longitudinal direction of a PC steel member, and further, the split pieces can be equally arranged also in a circumferential direction.

### Background Art

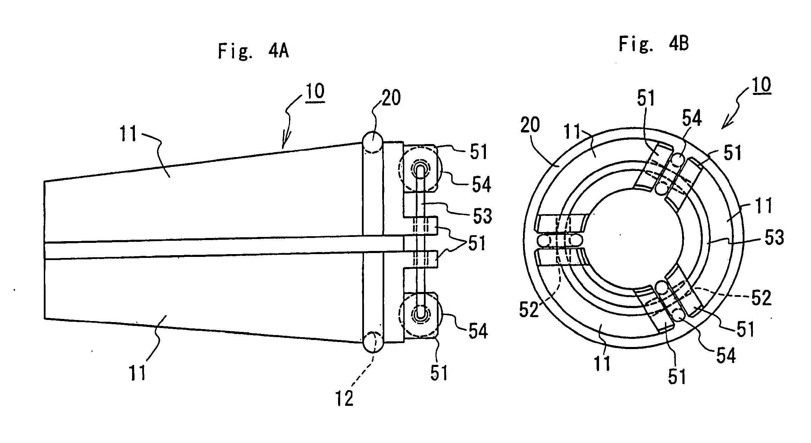

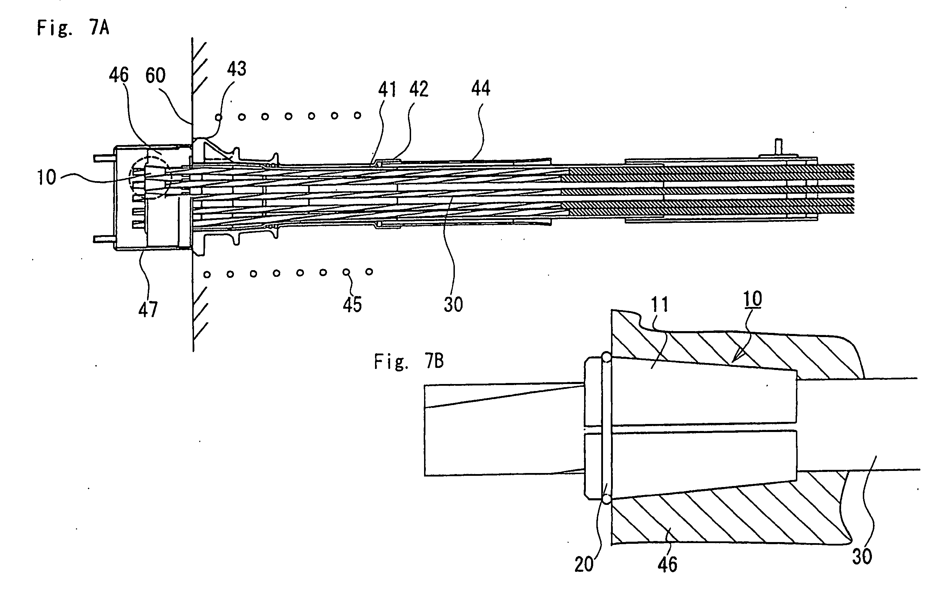

There has been known a structure using a wedge and an anchor disk as a structure for fixing a PC steel member such as a PC steel strand to a PC structure (disclosed in, for example, Japanese Patent Application Laid-Open (JP-A) No. 8-68158 (Fig. 4)). In such a fixing structure, a plurality of PC steel strands 30 are covered with inner and outer trumpets 41 and 42, and further, a rib cast anchor 43 is disposed on a side of an end of a concrete structure 60, as shown in, for example, FIGS. 7A and 7B.

An anchor disk 46 is mounted on the rib cast anchor 43. The anchor disk 46 is formed into a disk having a plurality of through holes for the PC steel strands 30. A part of the through hole is tapered in such a manner that a wedge 10, described later, is inserted thereinto.

Here, the wedge 10 is attached to the end of the PC steel strand 30. The wedge 10 is formed into a truncated cone by combining a plurality of split pieces 11 with each other. In the state in which the split pieces 11 are combined with each other, a circle hole extending in an axial direction is formed at the center of the wedge 10. The PC steel strand 30 is grasped by the wedge 10 inside of the circle hole. The split pieces 11 are integrated with each other via a restraint ring 20 made of rubber or steel for the purpose of prevention of separation. The restraint ring 20 is, for example, an O-ring to be fitted around the wedge formed into the truncated cone by combining the split pieces 11 with each other.

A jack applies a predetermined tension to the PC steel strand grasped by the wedge. In the tense state, the wedge is inserted into the through hole formed at the anchor disk, so that the PC steel strand is fixed to the PC structure.

As described above, since the wedge is constituted of the combination of the plurality of split pieces, it is desirable that the split pieces should be arranged uniformly in the longitudinal direction and equally in the circumferential direction after the wedge is fixed.

However, in the above-described wedge, the split pieces are non-uniformly arranged in the longitudinal and circumferential directions of the PC steelmember, and therefore, there has arisen a problem that a stress may be non-uniformly applied to the PC steel member.

In other words, before the tension is applied to the PC steel member, the split pieces can be uniformly arranged in the longitudinal direction. However, during the application of the tension, the split piece is temporarily inserted into the through hole formed at the anchor disk by pressing a fixing plate of the jack against the end of the split piece while the tension is applied to the PC steel member. As a consequence, if the end of the split piece non-uniformly abuts against the fixing plate, for example, only on either side, the split piece may be accidentally pushed out slantwise in the longitudinal direction. As described above, if some of the split pieces may be accidentally pushed out slantwise, the split pieces are non-uniformly and unequally arranged.

In contrast, if the tension is released after the predetermined tension is applied to the PC steel member, the PC steel member is contracted, and accordingly, the wedge grasping the PC steel member is also moved. With such movement, the wedge is further firmly inserted into the through hole formed at the anchor disk. At this time, if the axis of the PC steel member is deviated slantwise from the center axis of the through hole formed at the anchor disk, the split piece of the wedge abuts against the through hole only on one side, thereby raising a possibility of non-uniform arrangement of the split pieces.

In view of the above-described problems, an object of the present invention is to provide a wedge deviation preventing structure, in which split pieces can uniformly arranged in a longitudinal direction around a PC steel member so as to prevent any deviation of a stress to be applied to the PC steel member. JP 64 33344 A discloses an anchorage device for a polymer tendon.

### Disclosure of the invention

The present invention provides a structure according to claim I appended hereto. According to the present invention, the above-described object can be achieved by connecting a plurality of split pieces to each other via connecting means in such a manner as to prevent the split pieces from being separately moved in a longitudinal direction.

According to a reference example, a structure for preventing any deviation of a wedge, which is formed into a conical shape by combining *n* (n > 1) split pieces with each other and grasps a PC steel member, is characterized by comprising connecting means for restricting any deviation of each of the split pieces in a longitudinal direction while allowing each of the split pieces to be moved in a circumferential direction, so as to connect side surfaces of at least the n-1 split pieces to each other with an adjacent interval.

When the PC steel member is grasped by combining the split pieces with each other, the clearance is defined between the split pieces. During the application of tension, the split pieces may be separately moved in a longitudinal direction of the PC steel member or moved in a circumferential direction due to the clearance, thereby inducing non-uniform arrangement.

According to the present invention, the connecting means can restrict each of the split pieces from being deviated in the longitudinal direction, and further, can connect the split pieces to each other in the circumferential direction so as to allow them to be moved in the circumferential direction. The connecting means can uniformly hold the longitudinal arrangement of the split pieces after the fixation of the PC steel member to the wedge, thus uniformly applying a stress to the PC steel member.

Here, when the wedge is fitted into a through hole formed at an anchor disk under pressure, the clearance defined between the adjacent split pieces in the wedge becomes narrower by fastening. Therefore, the split piece need be allowed to be moved in the circumferential direction by the fastening operation of the wedge. As a consequence, the allowance of the circumferential movement according to the present invention signifies the circumferential movability of the split piece by the fastening operation in the wedge.

Normally, the wedge is designed to be formed into a truncated cone in the case where the split pieces are combined with each other. That is to say, each of the split pieces is formed in such a manner as to have a sectorial cross section perpendicular to the axial direction of the wedge.

Generally, in the case where the split pieces are combined with each other, the split pieces define a circle hole inside thereof, thereby forming a surface in contact with the PC steel member. Crest-shaped teeth are formed at the inner surfaces of the aplit pieces, so that the teeth receive a load to be exerted on the PC steel member in mesh with the PC steel member when the PC steel member is tensed or fixed. Although the number of split pieces is not particularly limited, it is typically about two or three.

In a reference example the connecting means may include a pin to be connected to side surfaces of the adjacent split pieces on a wedge large diameter side; and a restraint ring for holding the split pieces in the conical shape.

Specifically, an inserting well, into which the pin is inserted, is formed at both of the flat surfaces serving as the side surfaces on the wedge large diameter side of the sectorial split piece. The inserting well is formed in such a manner as to face to another inserting well formed at the adjacent split piece.

One end of the pin is inserted into the inserting well formed at one of the adjacent split pieces, and then, the other end of the pin is inserted into the inserting well formed at the other of the adjacent split pieces. In this manner, the split pieces are joined to each other in sequence in the circumferential direction via the pins. The joint via the pins can achieve the synchronous movement of all of the split pieces in the same direction, thereby inhibiting each of the split pieces from being separately moved and positionally deviated in the longitudinal direction.

Moreover, an annular groove is formed at the outer periphery on the large diameter side of each of the split pieces, and further, the restraint ring is fitted to the annular groove, thereby holding the wedge in a conical shape. It is preferable that the restraint ring should be made of an elastic member such as a rubber ring.

As described above, since all of the split pieces can be moved together in the same direction at all times without any deviation by using the pins and the restraint ring as the connecting means, the split pieces are uniformly arranged in the longitudinal direction on the outer periphery of the PC steel member, thereby uniformly applying a stress on the PC steel member.

Additionally, according to a reference example , the length of the pin and the depth of the inserting well are set such that the pin can slide inside of the inserting well without any slippage of the pin, and further, that the pin cannot abut against the bottom of the inserting well even if the interval between the adjacent split pieces becomes narrower by fitting the wedge into the through hole formed at the anchor disk under pressure, thus allowing the circumferential movement of the split piece.

In addition, in a further reference example, another connecting means may include a projection projecting at an end surface of each of the split pieces on a wedge large diameter side; an inserting hole formed through the side surface of the projection in the circumferential direction; and a ring member inserted into all of the inserting holes.

It is difficult to form an arcuate ring inserting hole from one side surface to the other side surface of the split piece having the sectorial cross section. However, according to the further reference example, the projection is formed by allowing a part of the end surface of the split piece on the wedge large diameter side to project, and the short inserting hole in length extending in the circumferential direction is formed at the side surface of the projection, so that the ring member can be readily inserted into the inserting hole.

According to the further reference example, since the side surface of the projection is the part of the side surface of the split piece, the ring member is inserted in sequence into the inserting holes formed at the projections, and thus the plurality of split pieces can be connected to each other at the side surfaces thereof via only one ring member.

The split pieces are connected to each other via the ring member, and further, the ring member is restricted from being moved in the longitudinal direction by the inserting hole formed at the projection, thereby inhibiting the split pieces frombeing separately moved in the longitudinal direction.

Also in this case, since all of the split pieces can be moved together in the same direction at all times, the split pieces are uniformly arranged in the longitudinal direction on the outer periphery of the PC steel member, thereby uniformly applying the stress on the PC steel member.

Moreover, according to the further reference example, the ring member is simply inserted into the inserting hole formed at the projection, so that the split piece can be allowed to be moved in the circumferential direction.

Additionally, although one projection may be formed with respect to one split piece at the center in the arcuate direction, the projections should be preferably formed at both ends in the arcuate direction. Otherwise, the projections may be formed at both ends and at the center in the arcuate direction. In this manner, the ring member can be held at many points by forming the plurality of projections at one split piece, thereby more excellently preventing any deviation of the split piece in the longitudinal direction.

It is preferable that a ring-like elastic member, into which the ring member is inserted, should be interposed between the projections formed at the adjacent split pieces in the case where the projections are formed at both ends of one split piece in an arcuate direction.

In this manner, it is possible to prevent any contact of the split pieces with each other, equally hold the clearance defined between the split pieces, and equally arrange the split pieces also in the circumferential direction by interposing the ring-like elastic member between the projections.

Additionally, the connecting means in the structure of the present invention are configured such that the side surfaces of the adjacent split pieces are joined to each other via a synthetic resin material having elasticity in such a manner that the split pieces can be developed on a plane. The synthetic resin material should be preferably made of a material which can be elastically deformed with ease or molded by injection such as silicone rubber.

In the case where the wedge is constituted of, for example, three split pieces, three (i.e., n) clearances are defined among the split pieces when the split pieces are arranged in the conical shape. Among the three clearances, the elastic synthetic resin material is embedded in all of the clearances except for one (i.e., n-1 cleirances), so that the adjacent split pieces are connected to each other.

In connecting the split pieces to each other via the elastic synthetic resin material, the split pieces may be connected to each other via the elastic synthetic resin material in the state in which the split pieces are arranged in the conical shape at a predetermined adjacent interval, or the split pieces may be connected to each other via the elastic synthetic resin material in the state in which the split pieces are developed in a plate-like manner.

In the case where the split pieces are connected to each other via the elastic synthetic resin material in the conical shape, each of the split pieces is held in the conical shape via the elastic synthetic resin material. Therefore, when the wedge is disposed in the PC steel member, the wedge is fitted to the PC steel member by developing the wedge and elastically deforming the elastic synthetic resin material. Incidentally, since the wedge is held in the conical shape, the conical shape can be held even without using any restraint ring, which has been conventionally used, although the restraint ring may be used.

Otherwise, in the case where the split pieces are connected to each other via the elastic synthetic resin material in the state in which the split pieces are developed in the plate-like manner, the split pieces are integrated with each other into a single plate via the elastic synthetic resin material. When the split pieces are constituted in the above-described plate-like manner, it is possible to elastically deform the elastic synthetic resin material, wind the split pieces around the PC steel member, and hold the wedge in the conical shape via the restraint ring.

The elastic synthetic resin material may be disposed in such a manner as to cover the entire side surface of the split piece, or may be disposed at a part of the side surface in the longitudinal direction as long as the positional deviation of the split piece can be prevented.

Also in this case, since all of the split pieces are connected to each other via the elastic synthetic resin material, the split pieces can be moved together in the same direction at all times, and further, they are uniformly arranged in the longitudinal direction on the outer periphery of the PC steel member, thereby uniformly applying the stress on the PC steel member.

Moreover, the split pieces are connected to each other via the elastic synthetic resin material, thereby allowing the circumferential movement of the split piece owing to the elastic deformation of the elastic synthetic resin material.

Incidentally, the wedge according to the present invention can be applied to not only a not-covered PC steel strand but also a PC steel strand covered with a resin such as an epoxy resin.

### Brief Description of the Drawings

FIG. 1A is a side view showing a wedge in a first reference example , and FIG. 1B is an end view thereof;
FIG. 2A is a side view showing a wedge in a second reference example , and FIG. 2B is an end view thereof;
FIG. 3A is a plan view showing a ring member for use in the second reference example , and FIG. 3B is a side view thereof;
FIG. 4A is a side view showing the wedge, shown in FIG. 2, including a ring member, a ring-like elastic member and a restraint ring, and FIG. 3B is an end view thereof;
FIG. 5A is a side view showing a wedge in a preferred embodiment according to the present invention, and FIG. 5B is an end view thereof;
FIG. 6 is a developed view of the wedge in the preferred embodiment, shown in FIG. 5; and
FIG. 7A is a cross-sectinal view showing a fixing structure of a PC steel strand, and FIG. 7B is an enlarged view along a broken line of FIG. 7A.

### Best Modes Carrying Out the Invention

A description will be given below of the reference examples and preferred embodiment according to the present invention.

### (First Reference Example)

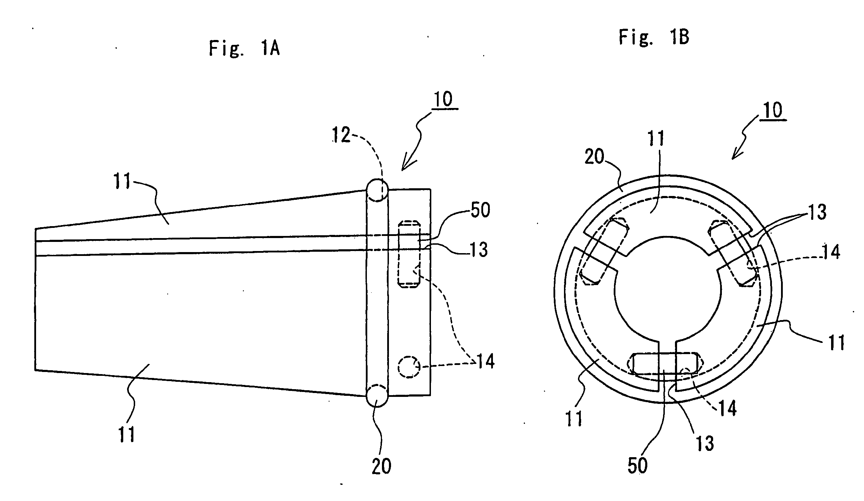

A wedge in a first reference example will be described in reference to FIGS. 1A and 1B. FIG. 1A is a side view showing a wedge, and FIG. 1B is an end view showing the wedge.

A wedge 10 according to the first reference example is constituted of three split pieces 11, as shown in FIG. 1B. Each of the split pieces 11 has a substantially sectorial cross section, and is formed into a tapered shape having a large diameter at one end thereof and a small diameter at the other end thereof. The three split pieces 11 are formed into a substantially truncated cone by combining the three split pieces 11 with each other.

The split piece 11 has the sectorial cross section having an arcuate surface. The inner surface of the split piece 11 is brought into contact with a PC steel strand. A circle hole for use in grasping the PC steel strand is formed by combining the split pieces 11 with each other. Here, crest-shaped teeth are formed at the inner surface of the split piece 11 in such a manner as to more firmly grasp the PC steel strand.

In the meantime, an annular groove 12 is formed around the wedge 10 on a large diameter side. To the annular groove 12 is fitted a restraint ring 20. The restraint ring 20 is an O-ring made of rubber. The restraint ring 20 holds the split pieces 11 in a conical shape.

Pin inserting wells 14 are formed at both side surfaces 13 of the split piece 11 on the large diameter side beyond the annular groove 12. The inserting well 14 of the split piece 11 is formed at the same position in the longitudinal direction.

Into the inserting well 14 is inserted a pin 50. The adjacent split pieces 11 are connected in a circumferential direction via the pin 50 by inserting both ends of the pin 50 into the inserting wells 14 formed at the adjacent split pieces 11. Here, the length of the pin 50 and the depth of the inserting well 14 are set in such a manner as to define a predetermined clearance between the side surfaces 13 of the split pieces 11 when the pin 50 is inserted into the inserting wells 14. In other words, the length of the pin 50 and the depth of the inserting well 14 are set in such a manner that the pin 50 is kept to be inserted into the inserting wells 14 till the completion of fixation after the wedge 10 is disposed in a PC steel member, and further, that the pin cannot abut against the bottom of the inserting well upon the completion of the fixation.

As described above, the pin 50 constitutes connecting means for connecting the split pieces 11 to each other in the present reference example .

When the pins 50 are inserted into all of the inserting wells 14, all of the split pieces 11 are connected to each other in a ring-like manner via the pins 50, as shown in FIG. 1B. All of the split pieces 11 are uniformly arranged owing to the pins 50 in the state in which the ends of the split pieces 11 mate with each other in the longitudinal direction. Since the split pieces 11 are joined to each other via the pins 50 in this manner, all of the split pieces 11 can be kept to be uniformly arranged all the time in the longitudinal direction even during the tension of the PC steel strand or even after the release of the tension. Consequently, the stress can be uniformly applied to the PC steel strand.

Moreover, in the present reference example, the existing split pieces can include the inserting wells 14, into which the pins 50 can be inserted. Therefore, only the number of pins 50 out of component parts is increased without any need of changing a design of the formation of the split piece.

The above-described wedge is also common to the conventional wedge from the viewpoint of the use for the fixing structure shown in FIG. 7A. In such a fixing structure, a plurality of PC steel strands 30 are covered with the inner and outer trumpets 41 and 42, and further, a rib cast anchor 43 is disposed on the side of the end surface of a concrete structure 60.

At the ends of the inner and outer trumpets 41 and 42 is disposed a recess tube 44. Around the inner and outer trumpets 41 and 42 and the rib cast anchor 43 is disposed a spiral stripe 45. Furthermore, an anchor disk 46 is mounted on the rib cast anchor 43.

The anchor disk 46 is formed into a disk shape, having a plurality of through holes for the PC steel strands 30. A part of the through hole is tapered in such a manner that the above-described wedge 10 is inserted thereinto. The ends of the anchor disk and the PC steel strand are covered with a grout cap 47.

It is to be understood that the fixing structure shown in FIG. 7A is one example of fixing structures using the wedge. In addition, there are listed (1) a structure using a single-layered tube sheath without using either of inner and outer trumpets; (2) a structure using a plate disposed at a concrete end surface without using any rib cast anchor; and (3) a structure, in which not a plurality of PC steel strands but only one PC steel strand is disposed.

### (Second Reference Example)

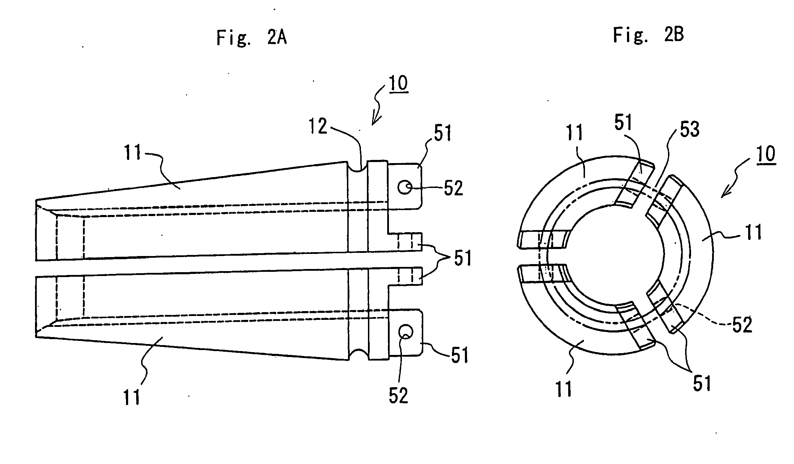

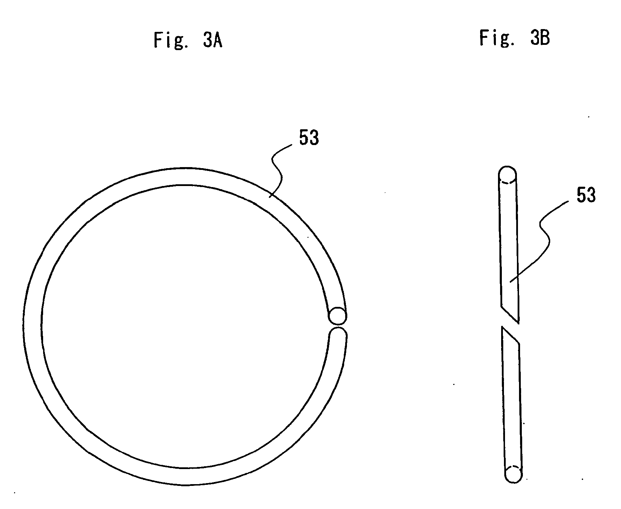

Subsequently, a second reference example, in which split pieces are connected to each other via a ring member, will be explained below in reference to FIGS. 2A, 2B, 3A and 3B. FIG. 2A is a side view showing a wedge; FIG. 2B is an end view of the wedge; FIG. 3A ia a plan view showing a ring; and FIG. 3B is a side view of the ring.

Connecting means for connecting split pieces 11 comprises projections 51 projecting from end surfaces of the split pieces 11 on a wedge large diameter side, inserting holes 52 formed through a side surface of the projections 51 in a circumferential direction, and a ring member 53 to be inserted into all of the inserting holes 52. Also in the present reference example, a restraint ring is used for securely holding the conical shape of a wedge 10. The restraint ring is an O-ring made of rubber and is fitted to an annular groove 12, like in the first reference example.

The projections 51 are formed at both ends in an arcuate direction at the end surface of the split piece 11 on the wedge large diameter side. At this time, the side surface of the projection 51 serves as a part of the side surface of the split piece 11. At the projection 51 is formed the inserting hole 52 extending in the circumferential direction.

As shown in FIGS. 3A and 3B, the ring member 53 is constituted by bending a wire-like elongated member made of a metallic material into an annular shape and molding the resultant member into a ring. The ring member 53 has slantwise cut ends.

All of the split pieces 11 are connected to each other in the circumferential direction via the single ring member 53 by inserting one end of the ring member 53 into the inserting holes 52 formed at the projections 51 in sequence.

As shown in FIGS. 4A and 4B, when the ring member 53 is inserted into the inserting holes 52, a ring-like elastic member 54, into which the ring member 53 is inserted, may be interposed between the projections 51 formed at the adjacent split pieces 11.

As described above, in the present reference example, the split pieces 11 can be inhibited from being separately moved in a longitudinal direction by connecting the side surfaces of the split pieces 11 to each other via the ring member 53. Also in this case, all of the split pieces 11 are moved together in the same direction all the time, so that the stress can be uniformly applied to the PC steel member by arranging the split pieces uniformly in the longitudinal direction around the PC steel member.

Additionally, in the present reference example, the split pieces are allowed to be moved in the circumferential direction since the ring member 53 is merely inserted into the inserting holes 52 formed at the projections 51.

Furthermore, the projections 51 are formed at both ends in the arcuate direction with respect to the single split piece, and therefore, the ring member 53 can be held at two points of the single split piece 11, thereby more excellently preventing any deviation of the split piece 11 in the longitudinal direction.

In addition, the ring-like elastic member 54 is interposed between the projections 51 formed at the adjacent split pieces 11, thus preventing any contact of the split pieces with each other, equally maintaining a clearance defined between the split pieces, and equally arranging the split pieces also in the circumferential direction.

### Preferred Embodiment)

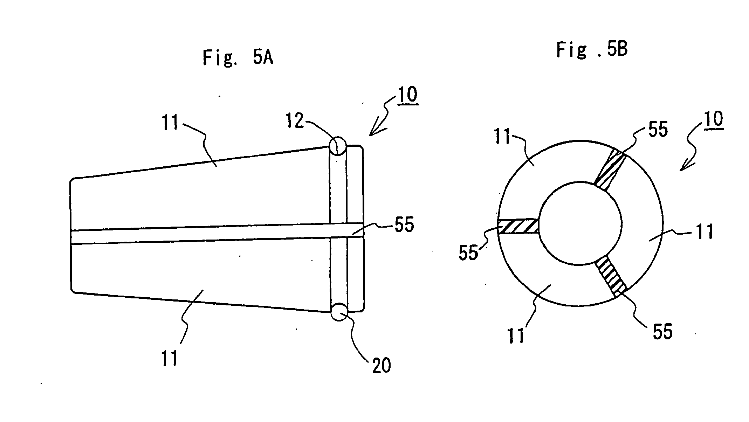

Subsequently, a description will be given of a wedge, in which side surfaces of split pieces are connected to each other via an elastic synthetic resin material, in reference to FIGS. 5A and 5B. FIG. 5A is a side view showing a wedge, and FIG. 5B is an end view thereof.

In connecting means in a preferred embodiment, side surfaces 13 of adjacent split pieces 11 are joined to each other via a synthetic resin material 55 having elasticity in such a manner as to freely develop the split pieces 11 on a plane.

As shown in FIGS. 5A and 5B, there are provided three split pieces 11. Three clearances are defined between the split pisces when the split pieces 11 are arranged in a conical manner. In the present preferred embodiment, the elastic synthetic resin materials 55 are embedded in the three clearances in the state in which the split pieces 11 are kept to be arranged in the conical manner. Two of the elastic synthetic resin materials 55 are jointed to the adjacent split pieces 11. The residual one of the elastic synthetic resin materials 55 is joined to the split piece 11 at only one side surface thereof while is released at the other side surface thereof. In this manner, when the split pieces 11 are arranged in the conical manner, the elastic synthetic resin material 55 is brought into contact with the split piece 11. The elastic synthetic resin material 55 is made of an elastic material such as silicone rubber.

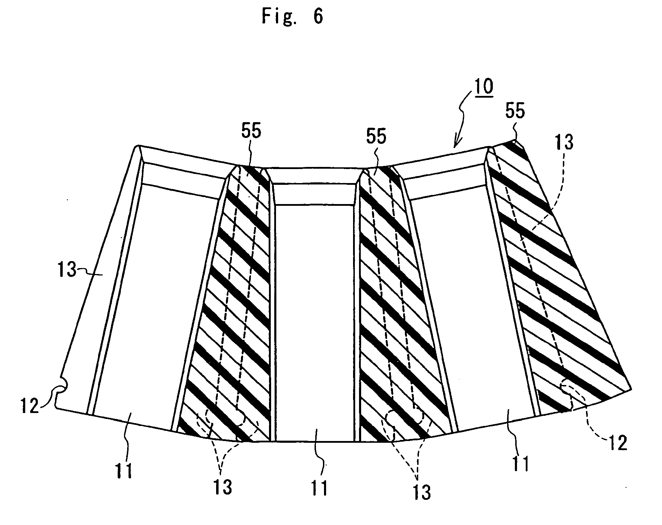

As described above, since the split pieces 11 are joined via the elastic synthetic resin materials 55, the side surfaces of the split pieces are connected to each other while keeping the conical shape via the elastic synthetic resin material 55, as shown in FIG. 5B. The wedge can be developed in a single plate, as shown in FIG. 6, by developing the split pieces from a not-joined portion and elastically deforming the elastic synthetic resin material.

In the meantime, the wedge can be returned to the original conical shape from the developed state in the plate by elastically restoring the elastic synthetic resin material. In this manner, the wedge in the present preferred embodiment can be wound around the PC steel member while the conical wedge is developed in the plate.

In this case, no restraint ring may be disposed in the wedge, but a restraint ring of an end releasing type may be disposed in the split piece 11 after the split pieces are wound around the PC steel strand. Otherwise, the PC steel strand may be inserted into the wedge without developing the wedge in the plate. At this time, a restraint ring may be disposed in the wedge.

The elastic synthetic resin material may be disposed in such a manner as to cover the entire side surface of the split piece, or may be partly disposed in the longitudinal direction as long as the positional deviation of the split piece can be prevented.

Also in this case, since all of the split pieces are connected to each other via the elastic synthetic resin materials, all of the split pieces are moved together in the same direction all the time, so that the stress can be uniformly applied to the PC steel member by arranging the split pieces uniformly in the longitudinal direction around the PC steel member.

Moreover, the split pieces are connected to each other via the elastic synthetic resin materials, the split pieces are allowed to be moved in the circumferential direction owing to the elastic deformation of the elastic synthetic resin material.

In addition, since the present preferred embodiment is configured such that the side surfaces of the split pieces are joined to each other via the elastic synthetic resin materials, the existing split piece can be used. Thus, the side surfaces of the split pieces can be joined to each other without any need of a design change of the split piece.

### Industrial Applicability

As described above, according to the present invention, the connecting means enables the split pieces to be arranged uniformly around the PC steel member in the longitudinal direction without any deviation and equally in the circumferential direction. Thus, the PC steel member can be equally held, thereby enhancing the performance of a fixing unit. Furthermore, the tension work for the PC steel member can be performed without any use of a special tool or device in the same manner as in the case of the use of the conventional wedge.

### Explanation of Reference Numerals

- 10: wedge
- 11: split piece
- 12: annular groove
- 13: side surface
- 14: inserting well
- 20: restraint ring
- 30: PC steel strand
- 41: inner trumpet
- 42: outer trumpet
- 43: rib cast anchor
- 44: recess tube
- 45: spiral stripe
- 46: anchor disk
- 47: grout cap
- 50: pin
- 51: projection
- 52: inserting hole
- 53: ring member
- 54: ring-like elastic member
- 55: synthetic resin material
- 60: concrete structure

## Claims

1. A structure for preventing any deviation of a wedge (10), which is formed into a conical shape by combining *n* (n > 1) split pieces (11) with each other and grasps a PC steel member, the wedge deviation preventing structure comprising:
connecting means for restricting any deviation of each of the split pieces (11) in a longitudinal direction while allowing each of the split pieces (11) to be moved in a circumferential direction, so as to connect side surfaces of at least the n-1 split pieces (11) to each other with an adjacent interval,
**characterized in that** the connecting means is configured such that the side surfaces of the adjacent split pieces (11) are joined to each other via a synthetic resin material (55) having elasticity in such a manner that the split pieces (11) can be developed on a plane.

## Patentansprüche

1. Anordnung zum Verhindern einer Abweichung eines Keils (10), der in einer konischen Form durch Kombinieren von n (n>1) Teilstücken (11) miteinander ausgebildet ist und ein PC-Stahlelement greift, wobei die Anordnung zum Verhindern einer Keilabweichung aufweist:
verbindungsmittel zum Begrenzen einer Abweichung jedes der Teilstücke (11) in einer Längsrichtung, während jedes der Teilstücke (11) in einer Umfangsrichtung bewegt werden kann, sodass Seitenoberflächen der zumindest n-1 Teilstücke (11) miteinander in einem angrenzenden Abstand verbunden werden,
**dadurch gekennzeichnet, dass** das Verbindungsmittel so gestaltet ist, dass die Seitenoberflächen der angrenzenden Teilstücke (11) aneinander mittels eines synthetischen Harzmaterials (55) zusammengefügt sind, das eine Elastizität derart aufweist, dass die Teilstücke (11) auf einer Ebene entwickelt werden können.

## Revendications

1. Structure pour empêcher toute déviation d'une cale (10), qui est formée selon une forme conique en combinant n (n > 1) pièces fendues (11) entre elles et saisit un élément en acier PC, la structure anti-déviation de cale comprenant :
des moyens de raccordement pour limiter toute déviation de chacune des pièces fendues (11) dans une direction longitudinale tout en permettant à chacune des pièces fendues (11) d'être déplacées dans une direction circonférentielle, afin de raccorder des surfaces latérales des au moins n-1 pièces fendues (11) entre elles avec un intervalle adjacent,
**caractérisée en ce que** les moyens de raccordement sont configurés de sorte que les surfaces latérales des pièces fendues (11) adjacentes sont assemblées entre elles via un matériau de résine synthétique (55) présentant une élasticité de sorte que les pièces fendues (11) peuvent être développées sur un plan.
